# EUROPÄISCHE PATENTANMELDUNG

(11) **EP 4 674 928 A1**
(43) Veröffentlichungstag der Anmeldung: **07.01.2026**
(21) Anmeldenummer: 25186155.5
(22) Anmeldetag: 30.06.2025
(51) Int. Cl.: C09K 21/02

(54) **INTUMESZIERENDE BRANDSCHUTZDISPERSIONEN**

(30) Priorität: 01.07.2024 DE 102024118620
(71) Anmelder: DOYMA GmbH & Co, 28876 Oyten (DE)
(72) Erfinder: Trautmann, John David, 28876 Oyten (DE); Paschenda, Kai, 28832 Achim (DE)
(74) Vertreter: Eisenführ Speiser

(57) **Zusammenfassung**

Die vorliegende Erfindung betrifft intumeszierende Dispersionen, die Blähgraphit und Alkaliwasserglaslösung umfassen und daraus hergestellt sind. Die Erfindung betrifft ferner flächiges Brandschutzmaterial, sowie einen entsprechenden verpackten Handelsartikel. Außerdem betrifft die Erfindung ein Kit umfassend den Handelsartikel und eine Manschettenhülle.

## Beschreibung

Die vorliegende Erfindung betrifft intumeszierende Dispersionen, die Blähgraphit und Alkaliwasserglaslösung umfassen und daraus hergestellt sind. Die Erfindung betrifft ferner flächiges Brandschutzmaterial, sowie einen entsprechenden verpackten Handelsartikel. Außerdem betrifft die Erfindung ein Kit umfassend den Handelsartikel und eine Manschettenhülle.

Durchbrüche, Durchführungen (z.B. für Kabelstränge und/oder Rohre) sowie sonstige Öffnungen in Wänden, Böden und/oder Decken von Gebäuden müssen zum Zwecke des Brandschutzes mit Brandschutz-Abdichtungen versehen werden, um zu verhindern, dass sich im Brandfall Feuer und Rauch durch diese Öffnungen in andere Gebäudeteile ausbreiten können. Üblicherweise enthalten diese Brandschutz-Abdichtungen aufschäumende Materialien bzw. bestehen aus solchen. Diese Brandschutz-Abdichtungen können in Form von härtenden, formlosen Brandschutzmassen oder in Form von vorgefertigten Stopfen, Streifen, Platten, Steinen und dergleichen eingesetzt werden, die in die abzudichtenden Öffnungen eingebracht werden oder diese in Form einer Abdeckung vor dem Mauerwerk abschließen.

Stand der Technik sind auf organischen Polymeren basierende Materialien, die zumeist phosphorhaltige Flammschutzmittel aufweisen.

Darüber hinaus offenbart die EP 2 457 976 A1 intumeszierende Brandschutzartikel in Form einer Rohr- oder Kabelabschottung bzw. als Bestandteil davon, umfassend ein Matrixmaterial, in welches die Bestandteile
(i) intumeszierender Blähgraphit,
(ii)
   (A) intumeszierende, alkangefüllte Mikrokapseln oder
   (B) ein oder mehrere verkapselte Stickstoff abspaltende und/oder Kohlendioxid abspaltende Treibmittel,
(iii) ein oder mehrere ausgewählte Flammschutzmittel, sowie gegebenenfalls
(iv) sonstige Bestandteile eingebettet sind.

Nachteil des Standes der Technik ist, dass der Einsatz beispielsweise polymerer oder anderer organischer Bindemittel die Verwendung von Lösungsmittel erfordert. Sowohl bei der Herstellung als auch bei der Verwendung führen die typischerweise eingesetzten organischen Lösungsmittel zu einer höheren Belastung mit flüchtigen organischen Verbindungen ("VOCs", "Volatile Organic Compounds"). Außerdem erfordern organische Bindemittel den Einsatz zusätzlicher Flammschutzmittel, wie halogen- oder phosphorhaltigen Verbindungen.

Aufgabe der Erfindung war es demzufolge, eine Zusammensetzung für intumeszierende Brandschutzartikel bereitzustellen, die ohne organische Bindemittel und damit einhergehende organische Lösungsmittel und VOC-Belastung hergestellt werden kann. Außerdem soll die chemische Zusammensetzung der Dispersion über ein angemessenes Zeitfenster verarbeitbar sein.

### Die vorliegende Erfindung

Gemäß der vorliegenden Erfindung wird Blähgraphit zusammen mit Wasserglaslösung zu einer Dispersion verarbeitet.

In einem ersten Aspekt betrifft die Erfindung eine intumeszierende Dispersion, die Blähgraphit und Alkaliwasserglaslösung umfasst. In einem zweiten Aspekt ist die Erfindung eine intumeszierende Dispersion von Blähgraphit, Kaliumwasserglaslösung und Prozessadditiven. Ein dritter Aspekt der Erfindung ist ein Brandschutzmittel, ein vierter Aspekt ist ein Handelsartikel und ein fünfter Aspekt betrifft ein Kit.

Die intumeszierende Dispersion gemäß der vorliegenden Erfindung löst die oben genannten Aufgaben. Es hat sich überraschenderweise herausgestellt, dass sich aus

Blähgraphit und Wasserglaslösung eine intumeszierende Dispersion als Paste und daraus Produkte mit sehr guten Brandschutzeigenschaften, insbesondere zum Verschließen von Wanddurchbrüchen, herstellen lassen. Die vorliegende Erfindung ist aus ökologischen und gesundheitlichen Gründen vorteilhaft gegenüber bekannten Brandschutzmitteln, da bei der Herstellung und Weiterverarbeitung keine zusätzlichen Flammschutzmittel oder Lösungsmittel eingesetzt werden müssen. Ein weiterer Vorteil der erfindungsgemäßen und in pastöser Form erhaltenen Dispersion liegt in der guten Verarbeitbarkeit über Tage hinweg, sowie in der möglichen Kombination mit vielfältigen Trägermaterialien.

Vorteile der Erfindung sind gegenüber Zusammensetzungen mit Polymeren oder organischen Bindemitteln die Vermeidung von (organischen) Lösungsmitteln, halogen- oder phosphorhaltigen Flammschutzmitteln und geringere VOC-Werte (VOC = "volatile organic compunds", flüchtige organische Verbindungen).

Weitere Vorteile der Erfindung sind eine längere Verarbeitbarkeit von bis zu drei Wochen, bis zur Weiterverwendung nach Einsetzen der Aushärtung unter Beibehalten der vollständigen Brandschutzwirkung.

Außerdem hat die erfindungsgemäße Zusammensetzung durch den Einsatz von Alkaliwasserglas einen pH-Wert größer als 7, was der bakteriellen Zersetzung von Brandschutzmaterial vorbeugt.

### Ausführliche Beschreibung

In einem ersten Aspekt bezieht sich die Erfindung auf eine intumeszierende Dispersion, die umfasst
a) 15 bis 40 Gew.-% Blähgraphit, bezogen auf das Gewicht der Dispersion,
b) Alkaliwasserglaslösung in einer Menge, sodass die Dispersion umfasst, jeweils bezogen auf das Gewicht der Dispersion,
   Siliziumdioxid in einer Menge im Bereich von 12 bis 30 Gew.-%,
   Wasser in einer Menge im Bereich von 25 bis 45 Gew.-% und
   Alkalimetalloxid in einer Gesamtmenge im Bereich von 5 bis 18 Gew.-%.

Die Gehalte an Siliziumdioxid und Alkalimetalloxid können gemäß EN ISO 21587-3:2007 mit induktiv gekoppelter Plasma- und Atomemissionsspektrometrie (ICP-AES) und Flammen-Atomemissionsspektrometrie (F-AAS) quantitativ bestimmt werden.

Die erfindungsgemäß eingesetzte Alkaliwasserglaslösung umfasst zumindest Alkaliwasserglas (M₂O·x SiO₂ mit M= Na, K, oder Li und 1 < x < 4), welches unter erhöhter Temperatur und Druck, zum Beispiel in einem Autoklav, in Wasser gelöst werden kann, um eine kolloide klare Lösung oder ein alkalisches Gel zu erhalten. Alkaliwasserglaslösung kann auch durch Autoklavenreaktion aus Quarz und Alkalilauge erhalten werden.

In Lösung liegen dabei Alkali-Kationen und Silikat-Anionen vor, wobei letztere unter basischen Bedingungen durch Kondensation komplexe Mischungen aus Polysilikat-Anionen ausbilden. Entscheidend für die Verarbeitbarkeit ist, dass M₂O·x SiO₂ nicht so weit getrocknet wird, dass Verkieselung eintritt, wodurch aus dem Wasserglas irreversibel unlösliche Kieselsäure entsteht.

Erfindungsgemäß ist von Vorteil, wenn die Alkaliwasserglaslösung eine Mischung aus zwei oder mehr Lösungen unterschiedlicher Wassergläser ist. Diese Wassergläser können sich in der Art des Alkalimetalls und der Stöchiometrie zwischen Alkali- und Silikat-Ionen unterscheiden.

Die intumeszierende Dispersion ergibt vorteilhafterweise eine Paste, die sich besonders gut durch Spachteln, Tauchen oder Rakeln auf ein Substrat applizieren lässt.

Bevorzugt umfasst die Dispersion Blähgraphit in einer Menge im Bereich von 20 bis 38 Gew.-%, bezogen auf das Gewicht der Dispersion, bevorzugter im Bereich von 23 bis 36 Gew.-%, insbesondere im Bereich von 25 bis 35 Gew.-%. Solche Mengen bieten vorteilhaft eine Balance aus eingesetztem Material und insgesamt resultierender Expansion der Dispersion oder des Brandschutzmaterials unter Hitzeeinwirkung.

In einer bevorzugten Form hat der Blähgraphit ein Expansionsvolumen von größer oder gleich 200 ml/g, bevorzugter im Bereich von 250 bis 400 ml/g, am meisten bevorzugt im Bereich von 300 bis 380 ml/g, insbesondere etwa 350 ml/g. Solche großen Expansionsvolumina bieten den Vorteil, dass weniger Blähgraphit eingesetzt werden muss, um die angestrebte intumeszierende Wirkung und beispielsweise ein sicheres Verschließen eines Rohrabschnitts zu erreichen. Die Starttemperatur der Ausdehnung liegt vorzugsweise bei 140 bis zu 230 °C, insbesondere bei 165 bis 200 °C. Die Starttemperatur und das Expansionsvolumen von Blähgraphit können mittels Thermomechanischer Analyse (TMA) ermittelt werden. Zur Ermittlung des vollen Expansionsvolumens können auch andere thermische Methoden mit bis zu 1.000 °C zum Einsatz kommen.

Üblicherweise wird für die Bestimmung des Expansionsvolumens in ml/g eine geringe Menge Blähgraphit eingewogen und durch Erhitzen expandiert. Das Volumen des expandierten Blähgraphits wird entweder direkt in einem Messzylinder bestimmt oder durch Verdrängung von einem Gas oder einer Flüssigkeit ermittelt. Das Verhältnis (V/m) von expandiertem Volumen (V [ml]) pro eingewogenem Blähgraphit (m [g]) ist als das Expansionsvolumen definiert.

Die Bestimmungen der Onset-Temperatur erfolgt zum Beispiel in einem thermomechanischen Modul (z.B. Mettler Toledo TMA/SDTA840), in welchem eine geringe Menge von Blähgraphit kontrolliert mit einer Aufheizrate von z.B. 10 °C/min in synthetischer Luft erhitzt wird. Über eine Messsonde wird eine Expansionskurve als Änderung des Volumens über die Temperatur gemessen und bis zu einem Plateau aufgezeichnet. Aus dem Anstieg des Volumens während der Expansion wird am Wendepunkt zwischen der Basislinie und dem Plateau eine Wendetangente ermittelt. Die Onset-Temperatur (in °C) ist mathematisch als Schnittpunkt der verlängerten Basislinie vor der Expansion der Probe und der Wendetangente der Expansionskurve definiert.

Es ist bevorzugt, dass der Blähgraphit einen Aschegehalt von kleiner oder gleich 5 Gew.-% besitzt. Bevorzugter ist der Aschegehalt kleiner oder gleich 3 Gew.-%, besonderes bevorzugt kleiner 1 Gew.-%. Der Aschegehalt wird üblicherweise gemäß DIN 51903 bestimmt.

Blähgraphit kann mit einer Vielzahl von interkalierter Säure, wie z.B. Schwefelsäure, Salpetersäure oder Essigsäure, verwendet werden. Der Kohlenstoffgehalt des Blähgraphit beträgt beispielsweise ≥ 98 Gew.-%.

Gemäß einer weiteren bevorzugten Ausführungsform der erfindungsgemäßen Zusammensetzungen liegt ein intumeszierender Blähgraphit vor, dessen Teilchen eine Größe im Bereich unter 1 mm besitzen. Die Teilchengröße ist hierbei z.B. der Teilchendurchmesser von Graphit-Plättchen. Die Teilchengrößenbestimmung kann durch, dem Fachmann geläufigen, Methoden zur Bestimmung von Teilchengrößen ermittelt werden. Beispielsweise kann die Teilchengröße durch Siebverfahren unter Verwendung von Sieben mit definierten Maschenweiten ermittelt werden, wie in der DIN 51938 beschrieben ist. Hierbei lässt sich auch der prozentuale Anteil (z.B. Gew.-%) bestimmter Teilchengrößen oder Teilchengrößenbereiche ermitteln, indem man z.B. Siebe unterschiedlicher Maschenweite ("Mesh") zum Fraktionieren des Teilchengutes verwendet und das jeweilige Gewicht der erhaltenen Siebfraktionen gemessen wird. Kommerziell erhältlicher Graphit oder Blähgraphit mit Teilchengrößen größer als eine ausgewiesene Maschenweite enthält üblicherweise mindestens 70 % oder mindestens 80 % Teilchen, die größer sind als die angegebene Maschenweite.

Es ist bevorzugt, dass der Blähgraphit eine Teilchengröße im Bereich von 150 bis 800 µm besitzt. Bevorzugter ist die Teilchengröße im Bereich von 200 bis 500 µm, insbesondere etwa 300 µm. Diese Größen von Blähgraphit sind besonders vorteilhaft im Hinblick auf Verfügbarkeit, Handhabung und Expansion.

Bevorzugt umfasst die Dispersion Siliziumdioxid in einer Menge im Bereich von 13 bis 27 Gew.-%, bezogen auf das Gewicht der Dispersion, bevorzugter im Bereich von 14 bis 24 Gew.-%, insbesondere im Bereich von 15 bis 21 Gew.-%.

Bevorzugt umfasst die Dispersion Wasser in einer Menge im Bereich von 30 bis 42 Gew.-%, bevorzugter im Bereich von 32 bis 40 Gew.-%, insbesondere im Bereich von 35 bis 39 Gew.-%. Damit lässt sich eine Viskosität der Dispersion erzielen, die für die Verarbeitung als Brandschutzprodukte besonders vorteilhaft ist.

Bevorzugt umfasst die Dispersion Alkalioxid in einer Gesamtmenge von 7 bis 17 Gew.-%, bezogen auf das Gewicht der Dispersion, bevorzugter im Bereich von 8 bis 16 Gew.-%, insbesondere im Bereich von 9 bis 15 Gew.-%. Dadurch werden besonders der pH-Wert und die resultierende Reaktivität der Wasserglaslösung eingestellt.

In einer bevorzugten Ausführungsform ist das Alkalioxid in der Wasserglaslösung Kaliumoxid, Natriumoxid oder eine Mischung von Kalium- und Natriumoxid, insbesondere Kaliumoxid. Dies ist vorteilhaft, da Natrium- und insbesondere Kaliumwasserglas ökonomischer sind als andere Wassergläser. Ferner ist die erfindungsgemäße Dispersion bei Einsatz von Kaliumwasserglas besser verarbeitbar. Kaliumwassergläser sind einerseits vorteilhaft in der Wasserlöslichkeit, was die Herstellung der intumeszierenden Dispersion vereinfacht. Andererseits haftet die Dispersion umfassend Kaliumwasserglas besser auf Trägermaterialien zur Erzeugung von flächigem Brandschutzmaterial. Die erhaltenen Brandschutzmaterialien sind elastischer und somit besser bieg- und weiter verarbeitbar.

Es ist ferner von Vorteil, zwei oder mehr Wasserglaslösungen zu verwenden, deren Eigenschaften sich ergänzen. Dies ist besonders vorteilhaft, um z.B. eine gute Verfilmung eines Wasserglases mit der zügigeren Wasserabgabe und Aushärtung eines anderen Wasserglases zu kombinieren.

Es ist weiterhin bevorzugt, dass die Dispersion ferner umfasst
c) bis zu 10 Gew.-% Füllstoff, bezogen auf das Gewicht der Dispersion, bevorzugter im Bereich von 3 bis 9 Gew.-%, am meisten bevorzugt im Bereich von 5 bis 8 Gew.-%, insbesondere im Bereich von 6 bis 7 Gew.-%.

Der Zusatz von Füllstoff fördert das Herausdiffundieren von Wasser. Außerdem können durch die Wahl der Füllstoffe andere Eigenschaften, wie beispielsweise in Form von Pigmenten, der optische Eindruck beeinflusst werden.

Bevorzugt ist der Füllstoff ausgewählt aus mineralischen Füllstoffen, bevorzugter aus silikatbasierten Füllstoffen, insbesondere Glasfaserfüllstoffen. Das ist besonders vorteilhaft für die Kompatibilität zwischen dem Wasserglas-Bindemittel und dem Füllstoff.

Weiterhin bevorzugt ist, dass die Dispersion ferner umfasst
d) ein oder mehrere Prozessadditive,
wobei das Prozessadditiv vorzugsweise ausgewählt ist aus Entschäumern, Entlüftern, Netzmitteln, Dispergierhilfsstoffen, Verdickern und Stabilisatoren,
wobei die Menge von dem einen oder mehreren Prozessadditiven d) vorzugsweise jeweils im Bereich von 0,01 bis 4 Gew. % liegt, bevorzugter im Bereich von 0,05 bis 2 Gew.-%, insbesondere in einem Bereich von 0,1 bis 1 Gew.-%.

Diese Prozessadditive wirken sich vorteilhaft auf die Verarbeitung und den Einsatz der Dispersion aus. Durch die Zugabe von Verdicker und Stabilisator kann die Viskosität der Dispersion gezielt eingestellt werden, um die Verarbeitungseigenschaften an die gewünschte Schichtdicke und das verwendete Substrat anzupassen und ein Nachdicken der Dispersion verringert werden. Verdicker sind beispielsweise Gelbildner wie Polysaccharide, die verzögert anquellen. Stabilisatoren können ausgewählt werden aus anionischen, kationischen, amphoteren und/oder nicht-ionischen oberflächenaktiven Mitteln und stabilisieren Polysilikate und Kieselsäuremicellen in Wasserglaslösungen. Die Zugabe von Netzmitteln und Dispergierhilfsstoffen fördert die Homogenität der Dispersion und deren gleichmäßige Verarbeitung. Entlüfter und Entschäumer reduzieren die Schaum- und Blasenbildung für oberflächige Makroschäume und homogen im Material verteilte Mikroschäume.

In einer zweiten Ausführungsform des ersten Aspekts bezieht sich die Erfindung auf eine intumeszierende Dispersion, die umfasst
a) 20 bis 38 Gew.-% Blähgraphit, bezogen auf das Gewicht der Dispersion,
b) Kaliumwasserglaslösung, in einer Menge, sodass die Dispersion umfasst, jeweils bezogen auf das Gewicht der Dispersion,
   Siliziumdioxid in einer Menge im Bereich von 13 bis 27 Gew.-%, bestimmt gemäß EN ISO 21587-3:2007,
   Wasser in einer Menge im Bereich von 30 bis 42 Gew.-%, und
   Kaliumoxid in einer Gesamtmenge im Bereich von 7 bis 17 Gew.-%, bestimmt gemäß EN ISO 21587-3:2007, und
c) 0,1-10 Gew.-% ein oder mehrere Prozessadditive, bezogen auf das Gewicht der Dispersion.

Ein zweiter Aspekt der Erfindung bezieht sich auf ein flächiges Brandschutzmaterial, umfassend
i) die intumeszierende Dispersion des ersten Aspektes der Erfindung und
ii) Trägermaterial.

Vorzugsweise ist das Trägermaterial ausgewählt aus Baumwolle, Hanffaser, Glasseide, Leinen, Wolle, Papier, Pappe, Kunststofffasern, Folien, Bast, Stroh und Kombinationen daraus. Vorteilhafterweise beschränkt das Trägermaterial das Herausdiffundieren von Wasser aus der intumeszierenden Dispersion.

Es ist außerdem von Vorteil, dass eine Vielfalt von Trägermaterialien mit der intumeszierenden Dispersion genutzt werden kann, um ein Brandschutzmaterial zu bilden. Die Auswahl der Trägermaterialien bietet eine große Flexibilität bei der Wahl der Form des Brandschutzmaterials und dessen Anwendungen.

In einer bevorzugten Ausführung ist das Brandschutzmaterial ausgebildet als
a) Bandförmiges Material, insbesondere Manschetten-Inlaymaterial,
b) Dichtscheibe oder Teil davon, oder
c) Matte.

Diese Ausführungen sind besonders vorteilhaft, weil das Brandschutzmaterial in einer im Baubereich gängigen Form und gebräuchlichen Maßen angeboten werden kann, beispielsweise als Wickelband, in Brandschutztüren oder einem Brandschutzschott.

In einem dritten Aspekt bezieht sich die Erfindung auf einen Handelsartikel, bei dem das Brandschutzmaterial in einer Einwegverpackung verpackt ist.

In einem vierten Aspekt bezieht sich die Erfindung auf ein Kit, das neben dem Handelsartikel eine Manschettenhülle umfasst, die ein- oder mehrteilig ausgebildet ist. Die Manschettenhülle ist vorzugsweise aus Metall oder Kunststoff.

Bevorzugt umfasst das Kit außerdem Dämmmaterial. Damit werden vorteilhafterweise alle Teile bereitgestellt, um z.B. eine Rohrdurchführung unter Brandschutz- und Isolationsaspekten abzudichten.

Erfindungsgemäße und bevorzugte Zusammensetzungen sind nachfolgend in Tabelle 1 angegeben:

**Tabelle 1: Erfindungsgemäße und bevorzugte Zusammensetzungen**

| Komponente/Gew.-% | Erfindungsgemäß eingesetzte Menge | | Bevorzugt | | Bevorzugter | | Insbesondere | |
|---|---|---|---|---|---|---|---|---|
| | von | bis | von | bis | von | bis | von | bis |
| Blähgraphit | 15 | 40 | 20 | 38 | 23 | 36 | 25 | 35 |
| Siliziumdioxid | 12 | 30 | 13 | 27 | 14 | 24 | 15 | 21 |
| Wasser | 25 | 45 | 30 | 42 | 32 | 40 | 35 | 39 |
| Alkalimetalloxid | 5 | 18 | 7 | 17 | 8 | 16 | 9 | 15 |

Die Vorteile der Erfindung ergeben sich insbesondere aus den folgenden Beispielen, wobei sich Mengenangaben, wenn nichts Anderes angegeben ist, auf das Gewicht beziehen.

### Beispiele:

In den Beispielen wurden drei verschiedene Wassergläser als Lösung einzeln oder in Kombination von zwei verschiedenen Wasserglaslösungen eingesetzt:
Natriumwasserglas 1: Alkaliwasserglaslösung mit 14,7 Gew.-% Na₂O und 30,3 Gew.-% SiO₂, wobei der Rest Wasser ist,
Kaliumwasserglas 1: eine Alkaliwasserglaslösung mit 14 Gew.-% K₂O und 26 Gew.-% SiO₂, wobei der Rest Wasser ist,
Kaliumwasserglas 2: eine Alkaliwasserglaslösung mit 14,7 Gew.-% K₂O und 30,3 Gew.-% SiO₂, wobei der Rest Wasser ist.

### Beispiel 1 (mit Natriumwasserglas 1):

Der verwendete Blähgraphit mit einem Kohlenstoffgehalt ≥ 98 Gew.-% hatte zu mehr als 80 Gew.-% eine Teilchengröße von 50 mesh (> 300 µm) und ein Expansionsvolumen von 350 ml/g +35/-0 ml/g, bei einer Onset-Temperatur von 165-200 °C.

Zur Herstellung der pastösen Dispersion wurde ein Teil Blähgraphit zu zwei Teilen Natriumwasserglaslösung zugegeben und vermengt. Bei der Herstellung ist darauf zu achten, dass die Temperatur der Dispersion 80°C nicht übersteigt. Die finale Zusammensetzung der Dispersion ergibt sich aus Tabelle 2.

**Tabelle 2**

| Komponente | Gew.-% | davon H₂O | davon SiO₂ | davon Na₂O | Blähgraphit |
|---|---|---|---|---|---|
| Natriumwasserglas 1 | 66,67 | 36,67 | 20,20 | 9,80 | - |
| Blähgraphit | 33,33 | - | - | - | 33,33 |
| **Gesamt** | **100,00** | **36,67** | **20,20** | **9,80** | **33,33** |

Die erhaltene pastöse Dispersion wurde auf Malervlies als Trägermaterial aufgetragen und zeigte dabei eine gute Haftung. Das so erhaltene Brandschutzmaterial war ausreichend elastisch und verformbar und für Rohre und Durchführungen mit einem Durchmesser größer als 50 mm geeignet.

### Beispiel 2 (mit Natriumwasserglas 1 und Kaliumwasserglas 1):

Der verwendete Blähgraphit entsprach Beispiel 1. Als Füllstoff wurde ein E-GlasfaserFüllstoff mit einer mittleren Faserlänge von 250 µm und einem runden Faserquerschnitt mit einer Faserstärke von 9 - 14 µm eingesetzt.

Zur Herstellung der pastösen Dispersion wurden Blähgraphit und Glasfaserfüllstoff zur vorgemischten Lösung der Wassergläser zugegeben und vermengt. Die finale Zusammensetzung der Dispersion ergibt sich aus Tabelle 3.

**Tabelle 3**

| Komponente | Gew.-% | davon H₂O | davon SiO₂ | davon M₂O | Blähgraphit | Füllstoff |
|---|---|---|---|---|---|---|
| Natriumwasserglas 1 | 33,33 | 18,33 | 10,10 | 4,90 | - | - |
| Kaliumwasserglas 1 | 33,33 | 20 | 8,67 | 4,67 | - | - |
| Glasfaserfüllstoff | 6,67 | - | - | - | - | 6,67 |
| Blähgraphit | 26,67 | - | - | - | 26,67 | - |
| **Gesamt** | **100,00** | **38,33** | **18,76** | **9,57** | **26,67** | **6,67** |

Die erhaltene pastöse Dispersion wurde auf Malervlies als Trägermaterial aufgetragen und zeigte dabei eine gute Haftung. Das so erhaltene Brandschutzmaterial war zufriedenstellend elastisch und verformbar und für Rohre und Durchführungen mit einem Durchmesser größer als 50 mm geeignet.

### Beispiel 3 (mit Natriumwasserglas 1 und Kaliumwasserglas 2):

Der verwendete Blähgraphit und der Füllstoff entsprachen Beispiel 2. Zur Herstellung der pastösen Dispersion wurden Blähgraphit und Glasfaserfüllstoff zur vorgemischten Lösung der Wassergläser zugegeben und vermengt. Die finale Zusammensetzung der Dispersion ergibt sich aus Tabelle 4.

**Tabelle 4**

| Komponente | Gew.-% | davon H₂O | davon SiO₂ | davon M₂O | Blähgraphit | Füllstoff |
|---|---|---|---|---|---|---|
| Natriumwasserglas 1 | 33,33 | 18,33 | 10,10 | 4,90 | - | - |
| Kaliumwasserglas 2 | 33,33 | 18 | 8 | 7,33 | - | - |
| Glasfaserfüllstoff | 6,67 | - | - | - | - | 6,67 |
| Blähgraphit | 26,67 | - | - | - | 26,67 | - |
| **Gesamt** | **100,00** | **36,33** | **18,10** | **12,23** | **26,67** | **6,67** |

Die erhaltene pastöse Dispersion wurde auf Malervlies als Trägermaterial aufgetragen und zeigte dabei eine gute Haftung. Das so erhaltene Brandschutzmaterial war zufriedenstellend elastisch und verformbar und für Rohre und Durchführungen mit einem Durchmesser ab 50 mm geeignet.

### Beispiel 4 (mit Kaliumwasserglas 1 und Kaliumwasserglas 2):

Der verwendete Blähgraphit und der Füllstoff entsprachen Beispiel 2. Zur Herstellung der pastösen Dispersion wurden Blähgraphit und Glasfaserfüllstoff zur vorgemischten Lösung der Kaliumwassergläser zugegeben und vermengt. Die finale Zusammensetzung der Dispersion ergibt sich aus Tabelle 5.

**Tabelle 5**

| Komponente | Gew.-% | davon H₂O | davon SiO₂ | davon K₂O | Blähgraphit | Füllstoff |
|---|---|---|---|---|---|---|
| Kaliumwasserglas 1 | 33,33 | 20 | 8,67 | 4,67 | - | - |
| Kaliumwasserglas 2 | 33,33 | 18 | 8 | 7,33 | - | - |
| Glasfaserfüllstoff | 6,67 | - | - | - | - | 6,67 |
| Blähgraphit | 26,67 | - | - | - | 26,67 | - |
| **Gesamt** | **100,00** | **38,00** | **16,67** | **12,00** | **26,67** | **6,67** |

Die pastöse Dispersion wurde auf Malervlies (180 g/m²) als Trägermaterial aufgetragen und das so erhaltene Brandschutzmaterial in einer Rohrdurchführung mit einem Polypropylen-Normrohr mit einem Durchmesser von 110 mm und einer Wandstärke von 2,8 mm verbaut. Die Durchführung bestand den Brandversuch gemäß DIN EN 1366-3 über 125 Minuten.

### Beispiel 5 (mit Kaliumwasserglas 1 und Kaliumwasserglas 2):

In einer fünften Ausführungsform wurden die zwei verschiedenen Lösungen der Kaliumwassergläser zusammen mit Verdicker und Stabilisator eingesetzt. Die Mengen von Verdicker und Stabilisator betragen jeweils von 0,125 bis 1,0 Gew.-% (Tabelle 6). Als Verdicker wurde Pulver vom Polysaccharid Xanthan mit einem Gehalt von 85 Gew.% verwendet. Als Stabilisator wurde eine wässrige Lösung von N,N,N',N'-Tetrakis(hydroxypropyl)ethylenediamine (pH 10,4) verwendet.

Die beiden Lösungen der Kaliumwassergläser wurden zu gleichen Teilen zugesetzt, um in der Summe mit Verdicker und Stabilisator 66,6 Gew.-% zu ergeben. Der verwendete Blähgraphit entsprach den anderen Beispielen und betrug 33,4 Gew.-% in der Dispersion.

**Tabelle 6**

| Dispersion | 5a | 5b | 5c | 5d | 5e | 5f |
|---|---|---|---|---|---|---|
| Verdicker [Gew.-%] | 1,0 | 0,5 | 0,25 | 0,125 | 0,25 | 0,25 |
| Stabilisator [Gew.-%] | 1,0 | 1,0 | 1,0 | 1,0 | 0,5 | 0,25 |
| H₂O aus Wasserglaslösungen [Gew.-%] | 36,82 | 37,11 | 37,25 | 37,32 | 37,54 | 37,68 |
| SiO₂ [Gew.-%] | 16,15 | 16,28 | 16,34 | 16,37 | 16,47 | 16,53 |
| K₂O [Gew.-%] | 11,63 | 11,72 | 11,76 | 11,79 | 11,85 | 11,90 |
| Blähgraphit [Gew.-%] | 33,4 | 33,4 | 33,4 | 33,4 | 33,4 | 33,4 |
| Haftung¹ | ++ | ++ | ++ | ++ | ++ | ++ |
| Verformbarkeit¹ | o | + | + | + | + | ○ |
| Geeignet für Rohrdurchmesser [mm] | > 50 | > 50 | ≥ 32 | ≥ 50 | > 50 | > 50 |

| | | | | | | |
|---|---|---|---|---|---|---|
| ¹ jeweils bestimmt auf Malervlies, ++ = "gut", + = "befriedigend", o = "ausreichend" | | | | | | |

Die Haftung, Verformbarkeit und Eignung für bestimmte Rohrdurchmesser für die Dispersion 5d wurde ebenfalls in Verbindung mit Leinengewebe, Baumwollgewebe und Hanfgewebe untersucht (Tabelle 7).

**Tabelle 7**

| | Malervlies | Leinengewebe | Baumwollgewebe | Hanfgewebe |
|---|---|---|---|---|
| Haftung¹ | ++ | ++ | ++ | ++ |
| Verformbarkeit¹ | + | o | o | o |
| Geeignet für Rohrdurchmesser [mm] | ≥ 50 | ≥ 32 | > 50 | ≥ 50 |

| | | | | |
|---|---|---|---|---|
| ¹ ++ = "gut", + = "befriedigend", ∘ = "ausreichend" | | | | |

Die Dispersion 5d wurde sowohl auf Malervlies als auch auf Leinengewebe jeweils in dem Brandschutztest gemäß DIN EN 1366-3 untersucht, entsprechend Beispiel 4. Für beide Trägermaterialien wird mit der Dispersion 5d der Brandschutztest bestanden.

### Beispiel 6 (mit Natriumwasserglas 1 und Kaliumwasserglas 2):

Der verwendete Blähgraphit entsprach den anderen Beispielen. Zur Herstellung der pastösen Dispersion wurden die Lösungen der Wassergläser vorgemischt und mit Verdicker und Stabilisator versetzt. Diese vorgemischte Lösung wurde dann mit Blähgraphit vermengt. Die finale Zusammensetzung der Dispersion ergibt sich aus Tabelle 8.

**Tabelle 8**

| Komponente | Gew.-% | davon H₂O | davon SiO₂ | davon M₂O | Blähgraphit | Additiv |
|---|---|---|---|---|---|---|
| Natriumwasserglas 1 | 32,77* | 18,02 | 9,93 | 4,82 | - | - |
| Kaliumwasserglas 2 | 32,77* | 17,70 | 7,86 | 7,21 | - | - |
| Verdicker | 0,125 | - | - | - | - | 0,125 |
| Stabilisator | 1,00 | - | - | - | - | 1,00 |
| Blähgraphit | 33,34 | - | - | - | 26,67 | - |
| **Gesamt** | **100,00** | **36,33** | **18,10** | **12,23** | **26,67** | **6,67** |

| | | | | | | |
|---|---|---|---|---|---|---|
| * Diese Werte sind für die Lesbarkeit aufgerundet. | | | | | | |

Die Dispersion wurde entsprechend Beispiel 4 auf ein Malervlies aufgetragen und ergab einen Brandschutzartikel, der den Brandschutztest gemäß DIN EN 1366-3 besteht.

## Patentansprüche

1. Intumeszierende Dispersion, die umfasst
a) 15 bis 40 Gew.-% Blähgraphit, bezogen auf das Gewicht der Dispersion,
b) Alkaliwasserglaslösung in einer Menge, sodass die Dispersion umfasst, jeweils bezogen auf das Gewicht der Dispersion,
Siliziumdioxid in einer Menge im Bereich von 12 bis 35 Gew.-%, bestimmt gemäß EN ISO 21587-3:2007,
Wasser in einer Menge im Bereich von 25 bis 45 Gew.-%, und
Alkalimetalloxid in einer Gesamtmenge im Bereich von 5 bis 18 Gew.-%, bestimmt gemäß EN ISO 21587-3:2007.

2. Dispersion nach Anspruch 1,
**dadurch gekennzeichnet, dass** die Dispersion Blähgraphit in einer Menge im Bereich von 20 bis 38 Gew.-% umfasst, bezogen auf das Gewicht der Dispersion, bevorzugt im Bereich von 23 bis 36 Gew.-%, insbesondere im Bereich von 25 bis 35 Gew.-%.

3. Dispersion nach Anspruch 1 oder 2,
**dadurch gekennzeichnet, dass** der Blähgraphit
ein Expansionsvolumen von größer oder gleich 200 ml/g besitzt, bestimmt mittels Thermomechanischer Analyse, bevorzugt im Bereich von 250 bis 400 ml/g, bevorzugter im Bereich von 300 bis 380 ml/g, insbesondere etwa 350 ml/g,
und/oder
eine Onset-Temperatur im Bereich von 140 °C bis 230 °C besitzt, bestimmt mittels Thermomechanischer Analyse, bevorzugt im Bereich von 165 °C bis 200 °C,
und/oder
einen Aschegehalt von kleiner oder gleich 5 Gew.-% besitzt, bestimmt gemäß DIN 51903, bevorzugt von kleiner oder gleich 3 Gew.-%, bevorzugter kleiner oder gleich 1 Gew.-%,
und/oder
eine Teilchengröße im Bereich von 150 bis 800 µm besitzt, gemessen nach DIN 51938, bevorzugt im Bereich von 200 bis 500 µm, insbesondere etwa 300 µm.

4. Dispersion nach einem der vorhergehenden Ansprüche,
**dadurch gekennzeichnet, dass** die Dispersion Alkaliwasserglaslösung in einer Menge umfasst, sodass die Dispersion umfasst, jeweils bezogen auf das Gewicht der Dispersion,
Siliziumdioxid im Bereich von 13 bis 27 Gew.-%, bevorzugt im Bereich von 14 bis 24 Gew.-%, insbesondere im Bereich von 15 bis 21 Gew.-%.

5. Dispersion nach einem der vorhergehenden Ansprüche,
**dadurch gekennzeichnet, dass** die Dispersion Alkaliwasserglaslösung in einer Menge umfasst, sodass die Dispersion umfasst, jeweils bezogen auf das Gewicht der Dispersion,
Wasser im Bereich von 30 bis 42 Gew.-%, bevorzugt im Bereich von 32 bis 40 Gew.-%, insbesondere im Bereich von 35 bis 39 Gew.-%.

6. Dispersion nach einem der vorhergehenden Ansprüche,
**dadurch gekennzeichnet, dass** die Dispersion Alkaliwasserglaslösung in einer Menge umfasst, sodass die Dispersion umfasst, jeweils bezogen auf das Gewicht der Dispersion,
Alkalimetalloxid in einer Gesamtmenge von 7 bis 17 Gew.-%, bevorzugt im Bereich von 8 bis 16 Gew.-%, insbesondere im Bereich von 9 bis 15 Gew.-%.

7. Dispersion nach einem der vorhergehenden Ansprüche,
**dadurch gekennzeichnet, dass** die Alkaliwasserglaslösung ein oder mehrere Typen Alkaliwasserglas ausgewählt aus Kaliumwasserglas, Natriumwasserglas und deren Mischungen umfasst,
wobei die Alkaliwasserglaslösung bevorzugt mehrere Typen Kaliumwasserglas umfasst.

8. Dispersion nach einem der vorhergehenden Ansprüche, die ferner umfasst
c) bis zu 10 Gew.-% Füllstoff, bezogen auf das Gewicht der Dispersion, vorzugsweise in einer Menge im Bereich von 3 bis 9 Gew.-%, bevorzugt im Bereich von 5 bis 8 Gew.-%, insbesondere im Bereich von 6 bis 7 Gew.-%.

9. Dispersion nach Anspruch 8,
**dadurch gekennzeichnet, dass** der Füllstoff ausgewählt ist aus mineralischen Füllstoffen, bevorzugt silikatbasierten Füllstoffen, insbesondere Glasfaserfüllstoffen.

10. Dispersion nach einem der vorhergehenden Ansprüche, die ferner umfasst
d) ein oder mehrere Prozessadditive,
vorzugsweise wobei das Prozessadditiv ausgewählt ist aus Entschäumern, Entlüftern, Netzmitteln, Dispergierhilfsstoffen, Verdickern und Stabilisatoren,
wobei die Menge von dem einen oder mehreren Prozessadditiven d) vorzugsweise jeweils im Bereich von 0,01 bis 4 Gew.-% liegt, bevorzugter im Bereich von 0,05 bis 2 Gew.-%, insbesondere in einem Bereich von 0,1 bis 2 Gew.-%.

11. Intumeszierende Dispersion, die umfasst
a) 20 bis 38 Gew.-% Blähgraphit, bezogen auf das Gewicht der Dispersion,
b) Kaliumwasserglaslösung in einer Menge, sodass die Dispersion umfasst, jeweils bezogen auf das Gewicht der Dispersion,
Siliziumdioxid in einer Menge im Bereich von 13 bis 27 Gew.-%, bestimmt gemäß EN ISO 21587-3:2007,
Wasser in einer Menge im Bereich von 30 bis 42 Gew.-%, und
Kaliumoxid in einer Gesamtmenge im Bereich von 7 bis 17 Gew.-%, bestimmt gemäß EN ISO 21587-3:2007, und
c) 0,1 bis 10 Gew.-% ein oder mehrere Prozessadditive, bezogen auf das Gewicht der Dispersion.

12. Flächiges Brandschutzmaterial, umfassend
i) die intumeszierende Dispersion gemäß einem der Ansprüche 1 bis 11 und
ii) Trägermaterial,
vorzugsweise wobei das Trägermaterial ausgewählt ist aus Baumwolle, Hanffaser, Glasseide, Leinen, Wolle, Papier, Pappe, Kunststofffaser, Folien, Bast, Stroh und Kombinationen daraus.

13. Brandschutzmaterial gemäß Anspruch 12 ausgebildet als
a) bandförmiges Material, insbesondere Manschetteninlaymaterial,
b) Dichtscheibe oder Teil davon, oder
c) Matte.

14. Handelsartikel, umfassend das Brandschutzmaterial gemäß Anspruch 12 oder 13 verpackt in einer Einwegverpackung.

15. Kit, umfassend
X) den Handelsartikel gemäß Anspruch 14,
Y) eine Manschettenhülle, die ein- oder mehrteilig ausgebildet ist,
vorzugsweise, wobei das Kit außerdem
Z) Dämmmaterial umfasst.
